# EUROPÄISCHE PATENTSCHRIFT

(11) **EP 2 492 519 B1**
(45) Veröffentlichungstag und Bekanntmachung des Hinweises auf die Patenterteilung: **23.03.2016**
(21) Anmeldenummer: 12001208.3
(22) Anmeldetag: 23.02.2012
(51) Int. Cl.: F16B 13/02

(54) **Einsteckvorrichtung sowie Anordnung aus einer Einsteckvorrichtung und einem Einsteckgegenstand**
Insertion device and assembly consisting of an insertion device and an insertion object
Dispositif d'insertion ainsi qu'installation composée d'un dispositif d'insertion et d'un objet d'insertion

(30) Priorität: 24.02.2011 DE 102011012339
(43) Veröffentlichungstag der Anmeldung: 29.08.2012
(73) Patentinhaber: Shop Systems GmbH, 88677 Markdorf (DE)
(72) Erfinder: Knoblauch, Rita, 88677 Markdorf (DE); Remensperger, Eugen, 88069 Tettnang (DE)
(74) Vertreter: Otten, Roth, Dobler & Partner mbB Patentanwälte

(56) Entgegenhaltungen:
- GB-A- 654 445

## Beschreibung

Die Erfindung betrifft eine Einsteckvorrichtung nach dem Oberbegriff des Anspruchs 1 sowie eine Anordnung aus einer Einsteckvorrichtung und einem Einsteckgegenstand.

Einsteckvorrichtungen für ein oder mehrere Einsteckgegenstände finden bei der Herstellung von beispielsweise Ausstellungswänden oder Präsentationsflächen Anwendung und sind aus diesem Bereich bekannt. Eine Einsteckvorrichtung kann beispielsweise gemäß der GB 654,445 ausgeführt sein. Insbesondere an Präsentationsflächen ist es dabei erwünscht, dass solche Einsteckvorrichtungen an der Schauseite einer solchen Ausstellungswand einen möglichst unauffälligen optischen Eindruck bieten, oder sich harmonisch in die optische Gestaltung der Schauseite einfügen. Daher sind Einsteckvorrichtungen bekannt, die eine rückseitige Befestigung an einer Schauwand vorsehen. Dabei weisen gängige Einstecksysteme der Nachteil einer verhältnismäßig umständlichen und daher langwierigen Montage auf.

Aufgabe der vorliegenden Erfindung ist es, eine möglichst flexibel und wirtschaftlich montierbare Einsteckvorrichtung bereitzustellen.

Diese Aufgabe wird durch eine Einsteckvorrichtung mit den Merkmalen des Anspruchs 1 gelöst.

Vorteilhafte Ausführungen der Erfindung werden in den Unteransprüchen angegeben.

Die Erfindung geht aus von einer Einsteckvorrichtung für einen Einsteckgegenstand, wobei der Einsteckgegenstand einen Einsteckabschnitt und einen Halteabschnitt aufweist, mit einer Einsteckeinheit, die zur Anordnung an einer Tragestruktur vorgesehen ist und in die der Einsteckabschnitt zur Aufnahme von Kräften des Einsteckgegenstandes und eines am Halteabschnitt angebrachten weiteren Gegenstandes einsteckbar ist, wobei die Einsteckeinheit einen hülsenförmigen Grundkörper mit einer zumindest von einer Einsteckseite her offen zugänglichen Einstecköffnung aufweist. Der Kern der Erfindung liegt darin, dass die Einsteckeinheit an ihrer Außenseite dazu ausgebildet ist, durch Einschlagen in die Tragestruktur eingebaut zu werden, und dass der hülsenförmige Grundkörper an einer Außenseite von einer gedachten einhüllenden Fläche umgeben ist, die von der Einsteckseite ausgehend entlang einer Längsachse des Grundkörpers einen sich verjüngenden Verlauf, z.B. einen konusartigen bzw. einen kegelstumpfartigen Verlauf, aufweist.

Unter einer Längsachse des hülsenförmigen Grundkörpers wird dabei eine geometrische Achse verstanden, die vergleichsweise zentral durch den offenen Bereich verläuft, der vom hülsenförmigen Grundkörper umgeben ist.

Die gedachte einhüllende Fläche verjüngt sich z.B. konisch zu einem Ende des Grundkörpers hin, das der Einsteckseite gegenüberliegt. In einer Ausführung verläuft eine Außenfläche eines Basiskörpers des Grundkörpers konisch, wobei daran abstehende Teile einen verjüngenden Verlauf definieren.

Für ein Einschlagen der Einsteckeinheit besteht der Grundkörper aus einem widerstandsfähigeren, insbesondere härteren Material als die Tragestruktur, so dass sich beim Einschlagen insbesondere nur ein Bereich der Tragestruktur z.B. verformen kann. Ebenso ist es denkbar, dass durch ein Einschlagen der Einsteckeinheit beispielsweise ein Stück des Materials der Tragestruktur abgeschnitten wird. Ein Einschlagen ist jedoch auch bei härteren Materialien durchführbar, wenn in der Tragestruktur eine höchstens passgenaue oder kleinere Ausnehmung, insbesondere eine Bohrung, vorhanden ist.

Die Erfindungsgemäße Ausführung der Erfindung bietet den Vorteil, dass durch die Einschlagbarkeit der Einsteckeinheit die Einsteckvorrichtung schnell montierbar ist und den verjüngenden verlauf eine Klemmwirkung bietet, die eine festsitzende Anbringung ermöglicht.

Eine bevorzugte Ausführung der Erfindung sieht vor, dass Rückhalteorgane an der Außenfläche ausgebildet sind, die an der Außenfläche radial abstehen. Dies bietet zum einen den Vorteil einer vergrößerten Kontaktfläche zwischen der Einsteckeinheit und dem Material der Tragestruktur. Insbesondere können zwischen den Rückhalteorganen Zwischenräume liegen, in die elastisches Material der Tragestruktur nach einem Einschlagen der Einsteckeinheit vordringen kann und durch eine teilweise formschlüssige Verbindung eine stabile Befestigung gewährleistet. Insbesondere ist es bevorzugt, wenn die Rückhalteorgane eine widerhakenartige Form aufweisen. Dabei können die Rückhalteorgane zumindest an ihrem äußeren Bereich keilförmig ausgebildet sein, so dass sich die Einsteckeinheit vergleichsweise leicht in eine Tragestruktur einschlagen bzw. eindrücken lässt und einem Entfernen aus der Tragestruktur jedoch vergleichsweise stärkeren Widerstand entgegensetzt.

Vorzugsweise ist der Einsteckbereich zylindrisch, womit sich eine einfache zylindrische Stange bzw. ein einfaches zylindrisches Rohr einstecken lässt.

Eine besonders bevorzugte Ausführung der Erfindung besteht darin, dass an der Innenseite des Grundkörpers im Einsteckbereich einen mechanischen Anschlag besitzt, z.B. am Ende des Einsteckbereichs. Damit kann vorteilhaft verhindert werden, dass ein Einsteckgegenstand unerwünscht tief in die Einsteckeinheit hineinrutscht. Zudem kann zum Einschlagen ein Werkzeug in die Einsteckeinheit eingesteckt werden und mittels des Anschlags in die Tragstruktur getrieben werden. Dadurch kann eine Stirnfläche der Einsteckeinheit bei der Montage geschont werden. Außerdem kann durch einen Anschlag, der z.B. auf die Einsteckeinheit abgestimmt ist, immer eindeutig positioniert im Grundkörper platziert werden, insbesondere in Bezug auf eine Verdrehstellung zu seiner Längsachse.

Erfindungsgemäß stehen an einer Außenseite des Grundkörpers klingenförmige Elemente ab, die ein Drehen des Grundkörpers innerhalb der Tragstruktur verhindern. Dadurch bietet die Einsteckeinheit vergleichsweise stärkeren Widerstand gegen ein Verdrehen z.B. durch ein Einschlagwerkzeug oder durch einen Einsteckgegenstand.

Eine weitere vorteilhafte Ausführung der Erfindung besteht darin, dass an einer Innenseite im Einsteckbereich des Grundkörpers Ausrichtmittel, die mit dem Einsteckabschnitt des Einsteckgegenstandes zusammenwirken, ausgebildet sind und ein Einstecken des Einsteckgegenstandes mit einer vorgegebenen Ausrichtung unterstützen.

Nachfolgend werden anhand eines Ausführungsbeispiels weitere Einzelheiten und Vorteile der Erfindung angegeben und anhand der Zeichnungen beschrieben. Es zeigen:
- Figur 1: eine schematische Seitenansicht einer Einsteckeinheit einer erfindungsgemäßen Einsteckvorrichtung,
- Figur 2: eine schematische Ansicht eines seitlichen Schnitts entlang einer Längsachse der Einsteckeinheit,
- Figur 3: eine schematische Ansicht eines seitlichen Schnitts entlang einer gemeinsamen Längsachse der Einsteckeinheit, eines Einschlagwerkzeugs und einer Bohrung.

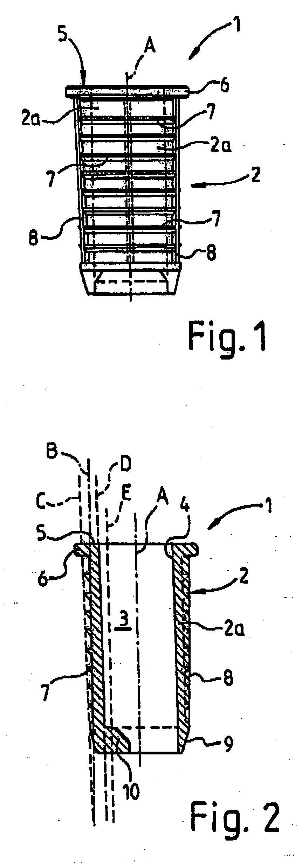

Die Figuren 1, 2 und 3 zeigen als Ausführungsbeispiel eine Einsteckeinheit einer erfindungsgemäßen Einsteckvorrichtung in Form einer Wandeinbaubuchse 1.

Die Wandeinbaubuchse 1 besteht aus einem Grundkörper 2 mit Basiskörper 2a, der eine im Wesentlichen zylindrische Grundform aufweist. Der Grundkörper kann z.B. aus Metall oder einem vergleichsweise harten Kunststoff hergestellt sein. Die zylindrische Grundform ist am parallelen Verlauf einer Linie B an einer Außenseite des Basiskörpers 2a zur Längsachse A erkennbar, die in Figur 2 gezeigt sind. An einer Stirnseite 5 befindet sich eine Einstecköffnung eines Einsteckbereichs 3.

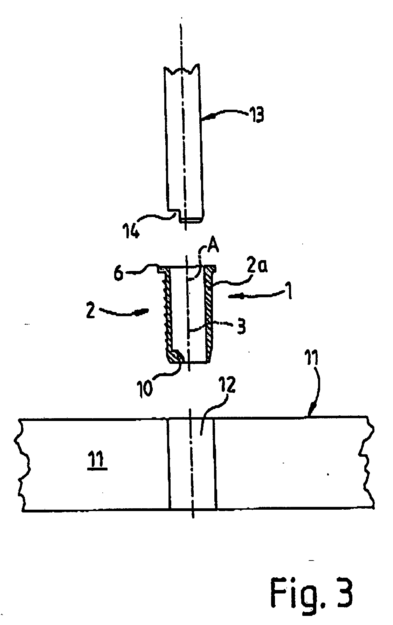

Die Einstecköffnung des Einsteckbereichs 3 ist an der Stirnseite 5 von einer Stirnmanschette 6 umgeben, die senkrecht vom Basiskörper 2a absteht. Sie kann als mechanischer Anschlag beim Einschlagen der Wandeinbaubuchse 1 dienen, wodurch beispielsweise ein Eindringen in eine Tragestruktur 11, wie in Figur 3 gezeigt, begrenzt ist.

Insgesamt acht Rückhalteringe 7 umgeben den Basiskörper 2a. Sie weisen von der Linie B aus betrachtet jeweils ein asymmetrisches, dreieckiges Querschnittsprofil auf, dessen Außenumfang zur Stirnseite 5 hin zunimmt bis es schließlich senkrecht bis zur Linie B abfällt. Dadurch ist die Wirkung von Widerhaken erzielbar, wenn insbesondere die Wandeinbaubuchse 1 in eine Schauwand aus z.B. Kunststoffhartschaum oder z.B. verdichtetem Holzfasermaterial eingeschlagen wird.

Entlang der Längsachse A steigt die äußerste Erstreckung der Rückhalteringe 7 von der Linie B aus derart an, dass eine Berührungslinie C einer gedachten einhüllenden Fläche in einem Winkel die Linie B schneidet. Dabei kann der Schnittwinkel zwischen den Linien B und C so klein gewählt sein, dass die Ausrichtung der Wandeinbaubuchse 1 im Wesentlichen der Längsachse A und der Linie B entspricht.

Um ein Verdrehen der Wandeinbaubuchse 1 beim Einschlagen und im Gebrauch zu vermeiden, sind am Basiskörper 2a drei schmale Längsklingen 8 ausgebildet, die im Winkelabstand von 120º gleichmäßig am Basiskörper angeordnet sind. Die Längsklingen 8 kreuzen die Rückhalteringe 7 im rechten Winkel und steigen ebenfalls entsprechend der Berührungslinie C an, die sie über einen größeren Abschnitt durchgehend berühren können. In einer nicht gezeigten Ausführungsform ist es jedoch auch denkbar, dass die Längsklingen über die Linie C hinausreichen.

Der Einsteckbereich 3 wird durch eine Innenwand 4 begrenzt, deren zylindrische Form von einem mechanischen Anschlag 10 gestört wird. Die Achse der Zylinderform der Innenwand 4 ist gegenüber der Längsachse A geneigt. Dies ist am Verlauf der Linie D, die der Innenwand folgt, und der Linie E, die parallel zur Längsachse A verläuft, erkennbar. Dadurch kann die Wandeinbaubuchse 1 so in eine Schauwand eingeschlagen werden, dass der Einsteckbereich 3 zur Stirnseite 5 hin ansteigt. Dadurch ist ein Herausfallen eines Einsteckgegenstandes, z.B. eines Präsentationshalters für z.B. Modegegenstände, erschwert.

Die Figur 3 zeigt neben der Wandeinbaubuchse 1 auch eine Tragestruktur in Form einer Schauwand 11 sowie ein Einschlagwerkzeug 13. Das Einschlagwerkzeug 13 kann in den Einsteckbereich 3 der Wandeinbaubuchse 1 eingesteckt werden, wobei das Einschlagwerkzeug 13 an einer Spitze eine Kerbe 14 aufweist, die an den mechanischen Anschlag 10 des Grundkörpers angepasst ist.

### Bezugszeichenliste:

- 1: Wandeinbaubuchse
- 2: Grundkörper
- 2a: Basiskörper
- 3: Einsteckbereich
- 4: Innenfläche
- 5: Stirnseite
- 6: Stirnmanschette
- 7: Rückhaltering
- 8: Längsklinge
- 9: Endabschnitt
- 10: Anschlag
- 11: Schauwand
- 12: Bohrung
- 13: Einschlagwerkzeug
- 14: Einkerbung

## Patentansprüche

1. Einsteckvorrichtung für einen Einsteckgegenstand, der einen Einsteckabschnitt und einen Halteabschnitt aufweist, mit einer Einsteckeinheit (1), die zur Anordnung an einer Tragestruktur (11) vorgesehen ist und in die der Einsteckabschnitt zur Aufnahme von Kräften des Einsteckgegenstands und eines am Halteabschnitt angebrachten weiteren Gegenstands einsteckbar ist, wobei die Einsteckeinheit (1) einen zumindest von einer Einsteckseite (5) her offen zugänglichen hülsenförmigen Grundkörper (2), der einen Einsteckbereich (3) umgibt, wobei die Einsteckeinheit (1) in die Tragestruktur (11) einschlagbar ist und dass der hülsenförmige Grundkörper (2) an einer Außenseite von einer gedachten einhüllenden Fläche umgeben ist, die von der Einsteckseite (5) ausgehend entlang einer Längsachse des Grundkörpers (2) einen sich verjüngenden Verlauf aufweist, **dadurch gekennzeichnet, dass**, an einer Außenseite des Grundkörpers (2) klingenförmige Elemente (8) abstehen, die ein Drehen des Grundkörpers (2) innerhalb der Tragstruktur (11) verhindern.

2. Einsteckvorrichtung nach einem der vorgenannten Ansprüche, **dadurch gekennzeichnet, dass** eine Außenfläche des Grundköpers (2) im Wesentlichen zylindrisch ist und Rückhalteorgane (7) an der Außenfläche ausgebildet sind, die an der Außenfläche abstehen.

3. Einsteckvorrichtung nach einem der vorgenannten Ansprüche, **dadurch gekennzeichnet, dass** Rückhalteorgane (7), die in einer von einer Längsachse des Grundkörpers (2) radial abweisenden Richtung abstehen, den Grundkörper (2) ringförmig umgeben.

4. Einsteckvorrichtung nach einem der vorgenannten Ansprüche, **dadurch gekennzeichnet, dass** der Grundkörper (2) an einem der Einsteckseite (5) gegenüberliegenden Seite einen mechanischen Anschlag (10) aufweist.

5. Einsteckvorrichtung nach einem der vorgenannten Ansprüche, **dadurch gekennzeichnet, dass** an einer Innenseite im Einsteckbereich (3) des Grundkörpers (2) Ausrichtmittel (10), die mit dem Einsteckabschnitt des Einsteckgegenstandes zusammenwirken, ausgebildet sind und ein Einstecken des Einsteckgegenstands mit einer vorgegebene Ausrichtung unterstützen.

6. Anordnung bestehend aus einer Einsteckvorrichtung nach einem der vorgenannten Ansprüche und einem Einsteckgegenstand.

## Claims

1. Insertion device for an insertion object, which comprises an insertion section and a holding section, with an insertion unit (1) which is provided for arranging on a support structure (11) and into which the insertion section can be inserted for receiving the forces of the insertion object and an additional object attached to the holding section, wherein the insertion unit (1) comprises a sleeve-like main body (2) accessible at least from an insertion side (5) which main body (2) surrounds an insertion area (3), wherein the insertion unit (1) can be driven into the support structure (11) and the sleeve-like main body (2) is surrounded on an outer side by an intended enclosing surface, which follows a tapering path from the insertion side (5) along a longitudinal axis of the main body (2), **characterised in that** on an outer side of the main body (2) blade-like elements (8) protrude which prevent the rotation of the main body (2) inside the support structure (11).

2. Insertion device according to any one of the preceding claims, **characterised in that** an outer surface of the main body (2) is essentially cylindrical and retaining elements (7) are formed on the outer surface, which protrude from the outer surface.

3. Insertion device according to any one of the preceding claims, **characterised in that** retaining elements (7), which protrude in a direction pointing radially away from a longitudinal axis of the main body (2), surround the main body (2) annularly.

4. Insertion device according to any one of the preceding claims, **characterised in that** on a side opposite the insertion side (5) the main body (2) comprises a mechanical stop (10).

5. Insertion device according to any one of the preceding claims, **characterised in that** on an inner side in the insertion area (3) of the main body (2) alignment means (10) are formed which interact with the insertion section of the insertion object and support the insertion of the insertion objects in a predefined orientation.

6. Arrangement consisting of an insertion device according to any one of the preceding claims and an insertion object.

## Revendications

1. Dispositif d'insertion pour un objet d'insertion présentant un tronçon d'insertion et un tronçon porteur, avec une unité d'insertion (1) prévue pour être disposée sur une structure porteuse (11) et dans laquelle le tronçon d'insertion peut être inséré pour absorber les forces de l'objet d'insertion et d'un autre objet placé sur le tronçon porteur, l'unité d'insertion (1) présentant un corps de base (2) en forme de gaine librement accessible au moins depuis un côté d'insertion (5), lequel corps de base entoure une zone d'insertion (3), l'unité d'insertion (1) pouvant être enfoncée dans la structure porteuse (11) et le corps de base (2) en forme de gaine étant entouré, sur une face extérieure, par une surface enveloppante imaginaire qui se rétrécit depuis le côté d'insertion (5) le long d'un axe longitudinal du corps de base (2), **caractérisé en ce que**, sur une face extérieure du corps de base (2), des éléments en forme de lames (8) sont en saillie et empêchent la rotation du corps de base (2) à l'intérieur de la structure porteuse (11).

2. Dispositif d'insertion selon l'une des revendications précédentes, **caractérisé en ce qu'**une face extérieure du corps de base (2) est essentiellement cylindrique et **en ce que** des organes de retenue (7) sont ménagés sur la surface extérieure en saillant de ladite surface extérieure.

3. Dispositif d'insertion selon l'une des revendications précédentes, **caractérisé en ce que** des organes de retenue (7), qui saillent dans une direction s'écartant radialement d'un axe longitudinal du corps de base (2), entourent le corps de base (2) de façon annulaire.

4. Dispositif d'insertion selon l'une des revendications précédentes, **caractérisé en ce que** le corps de base (2) présente une butée mécanique (10) sur un côté opposé au côté d'insertion (5).

5. Dispositif d'insertion selon l'une des revendications précédentes, **caractérisé en ce que**, sur une face intérieure, dans la zone d'insertion (3) du corps de base (2), sont ménagés des moyens d'alignement (10) qui coopèrent avec le tronçon d'insertion de l'objet d'insertion et aident à une insertion de l'objet d'insertion selon un alignement prédéfini.

6. Installation constituée d'un dispositif d'insertion selon l'une des revendications précédentes et d'un objet d'insertion.
